# EUROPEAN PATENT APPLICATION

(11) **EP 3 534 274 A1**
(43) Date of publication of application: **04.09.2019**
(21) Application number: 17863661.9
(22) Date of filing: 17.10.2017
(51) Int. Cl.: G06F 17/24, G06F 3/0488, G06F 3/16, G10L 15/00, G10L 15/10, G10L 25/63

(54) **INFORMATION PROCESSING DEVICE AND INFORMATION PROCESSING METHOD**

(30) Priority: 31.10.2016 JP 2016212897
(71) Applicant: Sony Corporation, Tokyo 108-0075 (JP)
(72) Inventor: NAKAGAWA, Yusuke, Tokyo 108-0075 (JP); KAWANO, Shinichi, Tokyo 108-0075 (JP); TAKI, Yuhei, Tokyo 108-0075 (JP)
(74) Representative: MFG Patentanwälte Meyer-Wildhagen Meggle-Freund Gerhard PartG mbB
(86) International application number: PCT/JP2017/037477
(87) International publication number: WO 2018/079332

(57) **Abstract**

This technology relates to an information processing apparatus and an information processing method for easily obtaining sentences that express emotions appropriately.

The information processing apparatus includes an emotion recognition section that recognizes an emotion input by a user performing an operation, and a modification section that modifies a sentence on the basis of the recognized emotion. This technology applies, for example, to apparatuses, servers, clients, and applications for performing speech recognition; and to apparatuses, servers, clients, and applications for performing diverse processes based on the result of the speech recognition.

## Description

### [Technical Field]

The present technology relates to an information processing apparatus and an information processing method. Particularly, the technology relates to an information processing apparatus and an information processing method for obtaining sentences that suitably express emotions.

### [Background Art]

Heretofore, it has been practiced to add emoticons, symbols, or special characters to sentences to express emotions. Such emotional expressions are difficult to input using speech recognition. For example, users are required to manually modify a sentence obtained through speech recognition in order to add emotional expression thereto.

In contrast, it has been proposed to estimate a user's emotion based on the prosody information regarding an input speech and, given a sentence through speech recognition of the input speech, supplement the sentence with additional information such as emphatic expression or emoticons expressive of the estimated emotion (e.g., refer to PTL 1).

### [Citation List]

### [Patent Literature]

[PTL 1]
Japanese Patent Laid-Open No. 2006-259641

### [Summary]

### [Technical Problem]

However, in cases where a sentence regarding a past event is to be input for example, the user's emotion at the time of the input may not necessarily match the emotion desired to be added to the sentence. Also, there may be cases where it is difficult to input a speech emotionally out of consideration for people nearby for example. Therefore, the invention described in PTL 1 may not be capable of suitably adding emotional expression to the sentence.

Under these circumstances, the present technology aims to easily obtain sentences that express emotions appropriately.

### [Solution to Problem]

According to one aspect of the present technology, there is provided an information processing apparatus including: an emotion recognition section configured to recognize an emotion input by a user performing an operation; and a modification section configured to modify a first sentence on the basis of the recognized emotion.

The information processing apparatus can further include a speech recognition section configured to convert an input speech into the first sentence. The modification section can modify the first sentence following the conversion by the speech recognition section.

In the case where the user performs an operation during input of the input speech, the modification section can modify a portion of the first sentence, the portion corresponding to the speech input during the operation performed by the user.

The emotion recognition section can recognize the emotion on the basis of the input speech.

The emotion recognition section can recognize at least either a type or a level of the emotion.

The emotion recognition section can recognize the emotion level on the basis of an amount of the operation performed by the user.

The emotion recognition section can recognize the emotion level on the basis of a combination of an amount of a swipe made by the user on an operation section and a time during which the operation section is pressed down.

The emotion recognition section can recognize the emotion type on the basis of a direction in which the user performs the operation.

The modification section can add a character string to at least the beginning, an intermediate position, or the end of the first sentence.

The modification section can adjust an amount of the character string to be added on the basis of the recognized emotion level.

The modification section can change the character string to be added on the basis of the recognized emotion type.

The modification section can change an expression of the first sentence while maintaining the meaning thereof.

The modification section can adjust a degree at which the expression is changed on the basis of the recognized emotion level.

The modification section can select a method of changing the expression on the basis of the recognized emotion type.

The emotion recognition section can recognize the emotion on the basis of the first sentence.

The emotion recognition section can recognize the emotion on the basis of a second sentence preceding the first sentence.

In the case where the first sentence is a response to a third sentence, the emotion recognition section can recognize the emotion on the basis of the third sentence.

The modification section can add to the first sentence an expression corresponding to the recognized emotion.

Also according to one aspect of the present technology, there is provided an information processing method including the steps of: recognizing an emotion input by a user performing an operation; and modifying a first sentence on the basis of the recognized emotion.

According to one aspect of the present technology, an emotion input by the user performing an operation is recognized. A sentence is then modified on the basis of the recognized emotion.

### [Advantageous Effect of Invention]

Note that, according to one aspect of the present technology, it is easy to obtain sentences that suitably express emotions.

Note that, the advantageous effects outlined above are not limitative of the present disclosure. Further advantages will become apparent from a reading of the present disclosure.

### [Brief Description of Drawings]

FIG. 1 is a block diagram depicting one embodiment of an information processing system to which the present technology is applied.
FIG. 2 is an external view illustrating a typical configuration of a controller.
FIG. 3 is a flowchart explaining a first embodiment of processing performed by a client.
FIG. 4 is a flowchart explaining a first embodiment of processing performed by a server.
FIG. 5 is a tabular diagram explaining a first example of a sentence modification method.
FIG. 6 is a tabular diagram explaining a second example of the sentence modification method.
FIG. 7 is a schematic diagram explaining a third example of the sentence modification method.
FIG. 8 is a tabular diagram explaining a fourth example of the sentence modification method.
FIG. 9 is a schematic diagram explaining a first example of an emotion input method.
FIG. 10 is a schematic diagram explaining a second example of the emotion input method.
FIG. 11 is another schematic diagram explaining the second example of the emotion input method.
FIG. 12 is a schematic diagram explaining a third example of the emotion input method.
FIG. 13 is another schematic diagram explaining the third example of the emotion input method.
FIG. 14 is another schematic diagram explaining the third example of the emotion input method.
FIG. 15 is another schematic diagram explaining the third example of the emotion input method.
FIG. 16 is another schematic diagram explaining the third example of the emotion input method.
FIG. 17 is another schematic diagram explaining the third example of the emotion input method.
FIG. 18 is a schematic diagram explaining a fourth example of the emotion input method.
FIG. 19 is another schematic diagram explaining the fourth example of the emotion input method.
FIG. 20 is a schematic diagram explaining a fifth example of the emotion input method.
FIG. 21 is a flowchart explaining a second embodiment of the processing performed by the client.
FIG. 22 is a flowchart explaining a second embodiment of the processing performed by the server.
FIG. 23 is another schematic diagram explaining the fifth example of the emotion input method.
FIG. 24 is a flowchart explaining an emotion recognition process.
FIG. 25 is a block diagram depicting a typical configuration of a computer.

### [Description of Embodiments]

The preferred embodiments for practicing the present invention (hereinafter referred to as the embodiments) are described below. Note that, the description is given under the following headings:
1. Embodiments
2. Alternative examples
3. Application examples

### <<1. Embodiments>>

### <1-1. Typical configuration of the information processing system>

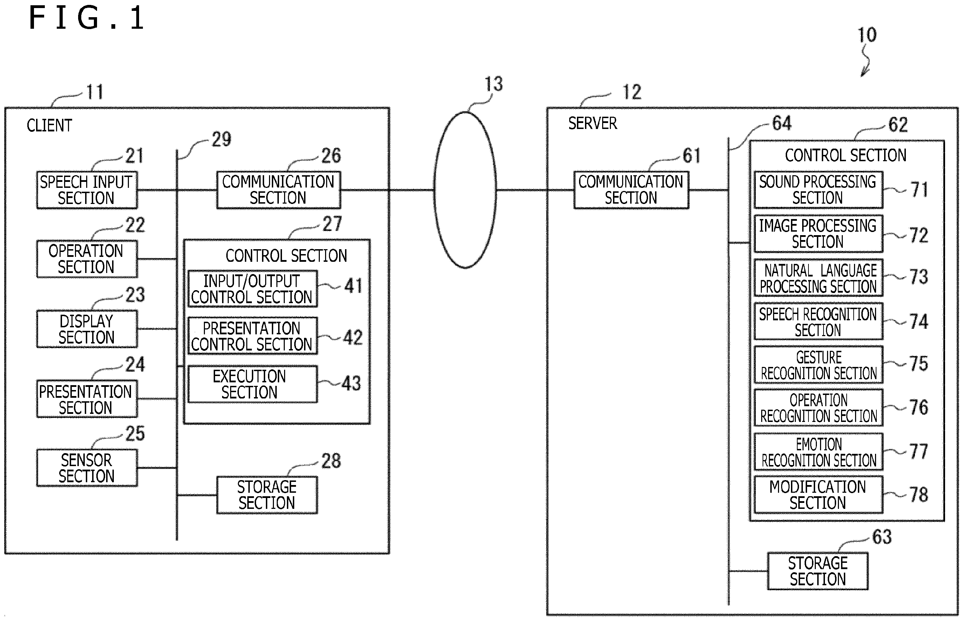

First, a typical configuration of an information processing system 10 to which the present invention is applied is described below with reference to FIG. 1.

The information processing system 10 performs the processes of recognizing an emotion that a user wishes to add to a sentence input by speech (called the input sentence hereinafter) and generating a sentence by modifying the input sentence based on the recognized emotion (the sentence is called the modified sentence hereinafter). The information processing system 10 includes a client 11, a server 12, and a network 13. The client 11 and server 12 are interconnected via the network 13.

Note that, whereas only one client 11 is depicted in the drawing, multiple clients may in practice be connected with the network 13. Multiple users may thus utilize the information processing system 10 via the clients 11.

The client 11 performs the processes of transmitting to the server 12 speech data indicative of a sentence input by the user by speech, receiving from the server 12 recognized speech information including the input sentence obtained as the result of speech recognition, as well as modified sentence information including a modified sentence obtained by modifying the input sentence, and presenting the input sentence and the modified sentence.

For example, the client 11 includes a mobile information terminal such as a smartphone, a tablet, a mobile phone, or a laptop personal computer; a wearable device, a desktop personal computer, a game machine, a video reproduction apparatus, or a music reproduction apparatus. Also, the wearable device can be of various types including, for example, a spectacle type, a wristwatch type, a bracelet type, a necklace type, a neckband type, a earphone type, a headset type, and a head-mounted type.

The client 11 includes a speech input section 21, an operation section 22, a display section 23, a presentation section 24, a communication section 26, a control section 27, and a storage section 28. The control section 27 includes an input/output control section 41, a presentation control section 42, and an execution section 43. The speech input section 21, operation section 22, display section 23, presentation section 24, communication section 26, control section 27, and storage section 28 are interconnected via a bus 29.

The speech input section 21 includes a microphone, for example. The number of microphones can be determined as desired. The speech input section 21 collects nearby speeches, supplies the control section 27 with speech data indicative of the collected speeches, and stores the speech data into the storage section 28.

The operation section 22 includes various operating members for use in operating the client 11. For example, the operation section 22 includes a controller, a remote controller, a touch panel, and hardware buttons. The operation section 22 supplies the control section 27 with operation data indicative of operation details regarding the control section 27.

The display section 23 includes a display, for example. Under control of the presentation control section 42, the display section 23 displays various images, a GUI (Graphical User Interface), and screens of diverse application programs and services.

The presentation section 24 includes speakers, a vibration device, and other collaborative devices for example. Under control of the presentation control section 42, the presentation section 24 presents diverse information.

A sensor section 25 includes various sensors including a camera, a distance sensor, a GPS (Global Positioning System) receiver, an acceleration sensor, and a gyro sensor. The sensor section 25 supplies the control section 27 with sensor data indicative of the results of detection by the sensors and stores the sensor data into the storage section 28.

The communication section 26 includes various communication devices. The method of communication by the communication section 26 is not limited to anything specific; communication may be carried out in either wireless or wired fashion. Also, the communication section 26 may support multiple communication methods. The communication section 26 communicates with the server 12 via the network 13 to transmit and receive diverse data to and from the server 12. The communication section 26 supplies the control section 27 with the data received from the server 12 and stores the received data into the storage section 28.

The control section 27 includes various processors, for example.

The input/output control section 41 controls the input and output of diverse data. For example, the input/output control section 41 extracts the data required in the process performed by the server 12 out of the speech data from the speech input section 21, out of the operation data from the operation section 22, and out of the sensor data from the sensor section 25. The input/output control section 41 then transmits the extracted data to the server 12 via the communication section 26 and the network 13. Furthermore, the input/output control section 41 receives the recognized speech information and the modified sentence information or the like from the server 12 via the communication section 26 and the network 13.

The presentation control section 42 controls the presentation of diverse information performed by the display section 23 and presentation section 24.

The execution section 43 executes various processes by carrying out diverse application programs (called the APPs hereinafter).

The storage section 28 stores the programs, data, and other resources necessary for the processes to be performed by the client 11.

The server 12 performs speech recognition on the basis of the speech data, operation data and sensor data received from the client 11, and generates the modified sentence by modifying the input sentence obtained as the result of the speech recognition. In addition, the server 12 then transmits the recognized speech information including the input sentence and the modified sentence information including the modified sentence to the client 11 via the network 13. The server 12 includes a communication section 61, a control section 62, and a storage section 63. The control section 62 includes a sound processing section 71, an image processing section 72, a natural language processing section 73, a speech recognition section 74, a gesture recognition section 75, an operation recognition section 76, an emotion recognition section 77, and a modification section 78. The communication section 61, control section 62, and storage section 63 are interconnected via a bus 64.

The communication section 61 includes various communication devices. The method of communication by the communication section 61 is not limited to anything specific; communication may be carried out in either wireless or wired fashion. Also, the communication section 61 may support multiple communication methods. The communication section 61 communicates with the client 11 via the network 13 to transmit and receive diverse data to and from the client 11. The communication section 61 supplies the control section 62 with the data received from the client 11 and stores the received data into the storage section 63.

The control section 62 includes various processors, for example.

The sound processing section 71 extracts various feature quantities from speech data. The feature quantities extracted by the sound processing section 71 are not limited to, but include, phonemes, sound volumes, intonations, lengths, and speeds, for example.

The image processing section 72 extracts various feature quantities out of image data. The feature quantities extracted by the image processing section 72 are not limited to, but include, the quantities of features suitable for recognizing human gestures, for example.

The natural language processing section 73 performs natural language processing such as morphological analysis, parsing, and modality analysis.

The speech recognition section 74 performs speech recognition to convert input speeches into character strings. The speech recognition section 74 transmits the recognized speech information including the input sentence obtained as the result of speech recognition to the client 11 via the communication section 61 and the network 13.

On the basis of the feature quantities extracted by the image processing section 72 for example, the gesture recognition section 75 recognizes the gesture of a person that appears in the image data.

The operation recognition section 76 recognizes operations performed by the client 11 on the basis of operation data acquired from the client 11.

The emotion recognition section 77 performs an emotion recognition process based on the results of processes carried out by the sound processing section 71, image processing section 72, natural language processing section 73, speech recognition section 74, gesture recognition section 75, and operation recognition section 76. For example, the emotion recognition section 77 recognizes the type of emotion (hereinafter called the emotion type) and the level of emotion (hereinafter called the emotion level).

The modification section 78 generates the modified sentence by modifying the input sentence recognized by the speech recognition section 74 on the basis of the emotion recognized by the emotion recognition section 77. The modification section 78 transmits the modified sentence information including the modified sentence thus generated to the client 11 via the communication section 61 and the network 13.

The storage section 63 stores the programs and data or the like necessary for the processes to be performed by the server 12.

Note that, in the description that follows, in cases where the client 11 (communication section 26) and the server 12 (communication section 61) communicate with each other via the network 13, the wording "via the network 13" will be omitted. In like manner, where the components of the client 11 exchange data therebetween via the bus 29, the wording "via the bus 29" will be omitted. Likewise, where the components of the server 12 exchange data therebetween via the bus 64, the wording "via the bus 64" will be omitted.

### <1-2. Specific example of the operation section 22>

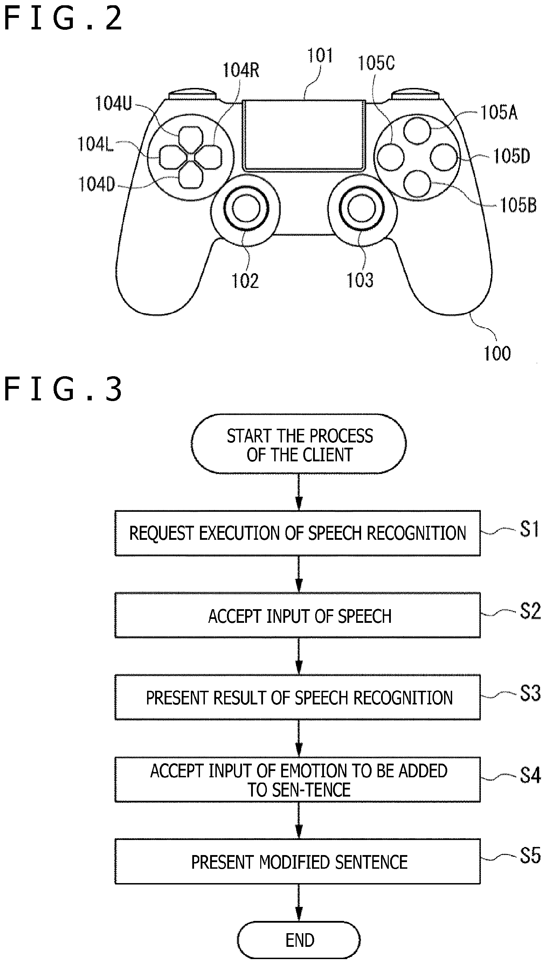

FIG. 2 illustrates a typical configuration of a controller 100 as an example of the operation section 22.

The controller 100 includes a touch pad 101, sticks 102 and 103, arrow keys 104U to 104R, and buttons 105A to 105D.

When touched (i.e., swiped) with a fingertip, the touch pad 101 detects the direction and distance of the movement made with the fingertip. Also, when lightly tapped, the touch pad 101 detects a tapping operation.

When tilted up, down, right, or left (or forward, backward, to the right, or to the left), the stick 102 causes an operation target to move in the direction thus ordered. Also, when pressed down, the stick 102 also functions as a button.

Like the stick 102, when tilted up, down, right, or left (or forward, backward, to the right, or to the left), the stick 103 causes the operation target to move in the direction thus ordered. Also, when pressed down, the stick 103 also functions as a button.

The arrow keys 104U to 104R are used to order the up, down, right, or left direction (or the forward, backward, rightward, or leftward direction), respectively.

The buttons 105A to 105D are used to select appropriate numbers and symbols, for example.

### <1-3. First embodiment of the processing performed by the information processing system 10>

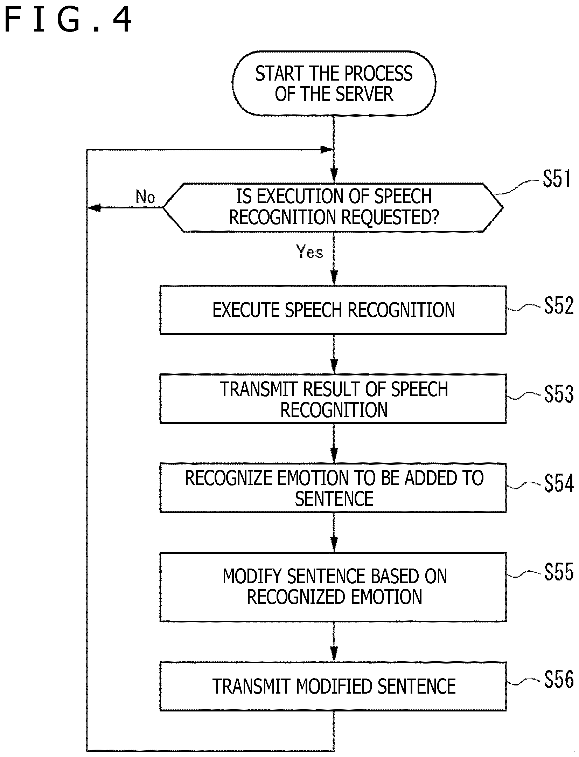

A first embodiment of the processing performed by the information processing system 10 is explained below with reference to FIGS. 3 and 4.

First, the process performed by the client 11 is explained with reference to the flowchart in FIG. 3. This process is started, for example, when the user inputs an order to execute speech recognition via the operation section 22.

In step S1, the input/output control section 41 requests execution of speech recognition. Specifically, the input/output control section 41 generates a speech recognition start instruction that acts as a command to order the start of speech recognition. The input/output control section 41 transmits the speech recognition start instruction to the server 12 via the communication section 26.

In step S2, the client 11 accepts speech input. Specifically, the presentation control section 42 controls the display section 23 or the presentation section 24 to prompt the user to input by speech the sentence desired to be recognized (input sentence). In response, the user enters the input sentence by speech. The input/output control section 41 acquires from the speech input section 21 the speech data representing the speech of the input sentence and transmits the acquired speech data to the server 12 via the communication section 26.

In step S52 in FIG. 4, to be discussed later, the server 12 performs speech recognition on the speech data from the client 11. In step S53, the server 12 transmits recognized speech information including the input sentence recognized through speech recognition.

In step S3, the client 11 presents the result of speech recognition. Specifically, the input/output control section 41 receives the recognized speech information from the server 12 via the communication section 26. The presentation control section 42 causes the display section 23 to display the input sentence included in the recognized speech information.

In step S4, the client 11 accepts input of the emotion to be added to the sentence. For example, the presentation control section 42 controls the display section 23 or the presentation section 24 to prompt the user to input the emotion to be added to the sentence. Also, as another example, the presentation control section 42 causes the display section 23 to display an input screen through which to input the emotion.

In response, the user performs operations to input the emotion using the operation section 22. The input/output control section 41 acquires from the operation section 22 the operation data reflecting the user's operations and transmits the acquired operation data to the server 12 via the communication section 26.

In step S54 in FIG. 4, to be discussed later, the server 12 recognizes the emotion to be added to the sentence on the basis of the operation data. Also, in step S56, the server 12 transmits to the client 11 modified sentence information including a modified sentence generated by modifying the input sentence on the basis of the recognized emotion.

In step S5, the client 11 presents the modified sentence. Specifically, the input/output control section 41 receives the modified sentence information from the server 12 via the communication section 26. The presentation control section 42 causes the display section 23 to display the modified sentence included in the modified sentence information.

Subsequently, the process of the client 11 is terminated.

Explained next with reference to the flowchart in FIG. 4 is the process performed by the server 12 in conjunction with the process of client 11 in FIG. 3.

In step S51, the speech recognition section 74 discriminates whether execution of speech recognition is requested. The speech recognition section 74 repeats the processing of step S51 in a suitably timed manner until it is discriminated that execution of speech recognition is requested. In addition, in the case where the speech recognition start instruction transmitted from the client 11 in step S1 in FIG. 3 is received via the communication section 61, the speech recognition section 74 discriminates that execution of speech recognition is requested. Control is then transferred to step S52.

In step S52, the speech recognition section 74 performs speech recognition. Specifically, the speech recognition section 74 receives via the communication section 61 the speech data transmitted from the client 11 in step S2 in FIG. 3. The speech recognition section 74 performs a speech recognition process on the received speech data. More specifically, the speech recognition section 74 acquires the input sentence by converting the speech represented by the speech data into a character string.

In step S53, the speech recognition section 74 transmits the result of the speech recognition. Specifically, the speech recognition section 74 generates recognized speech information including the input sentence obtained as the result of speech recognition. The speech recognition section 74 transmits the recognized speech information thus generated to the client 11 via the communication section 61.

In step S54, the server 12 recognizes the emotion to be added to the sentence. Specifically, the operation recognition section 76 receives via the communication section 61 the operation data transmitted from the client 11 in step S4 in FIG. 3. The operation recognition section 76 recognizes the operations performed on the client 11 on the basis of the operation data. The emotion recognition section 77 recognizes at least either the type of the emotion (emotion type) to be added to the sentence or the level of the emotion (emotion level).

In step S55, the modification section 78 modifies the sentence in accordance with the recognized emotion. For example, the modification section 78 generates a modified sentence by adding to the input sentence the emotional expression representing the recognized emotion.

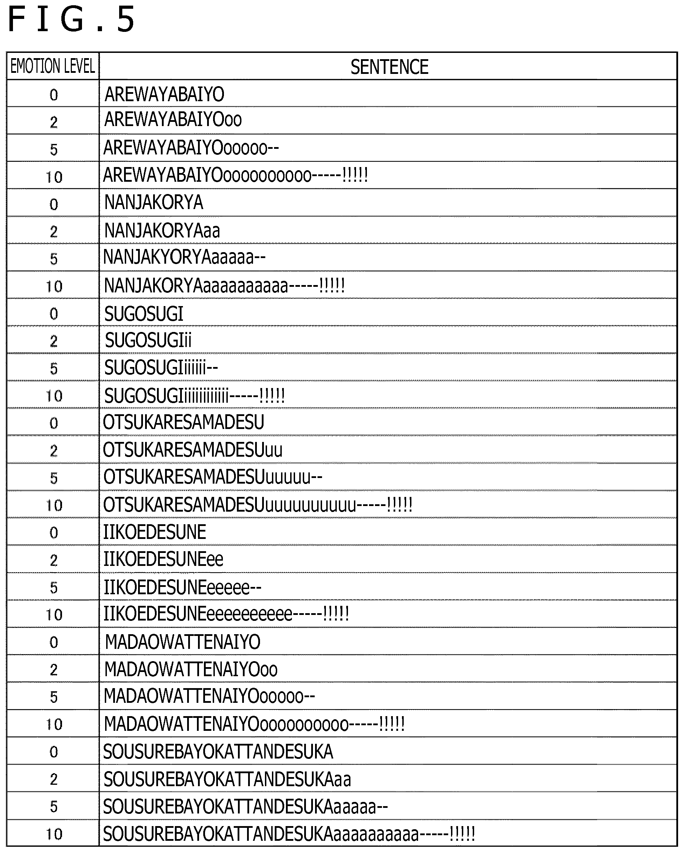

Explained below in reference to FIGS. 5 to 8 are examples of the method of modifying sentences.

FIG. 5 depicts an example of modifying sentences on the basis of the emotion levels. In this example, a sentence is modified by adding a character string to the end of the sentence. Here, the character string refers to a sequence of one or more characters or symbols. There may be cases in which a single character is added. Note that, a sentence at the emotion level of 0 serves as the basic sentence prior to modification.

In this example, basically the higher the emotion level, the larger the amount of the character strings to be added. For instance, given the basic sentence "AREWAYABAIYO," the modified sentence at the emotion level of 2 is "AREWAYABAIYOoo." At the emotion level of 5, the modified sentence is "AREWAYABAIYOooooo--." At the emotion level of 10, the modified sentence is "AREWAYABAIYOoooooooooo-----!!!!!"

Also, in another example, not depicted in FIG. 5, given the input sentence "That's so crazy" in English corresponding to "AREWAYABAIYO," the modified sentence at the emotion level of 2 is "That's so crazy!!" At the emotion level of 5, the modified sentence is "That's so crazzzzy!!!" At the emotion level of 10, the modified sentence is "THAT'S SO CRAZZZZYYYY!!!" The modified sentence at the emotion level of 10 is entirely capitalized to express the emotion more strongly than ever.

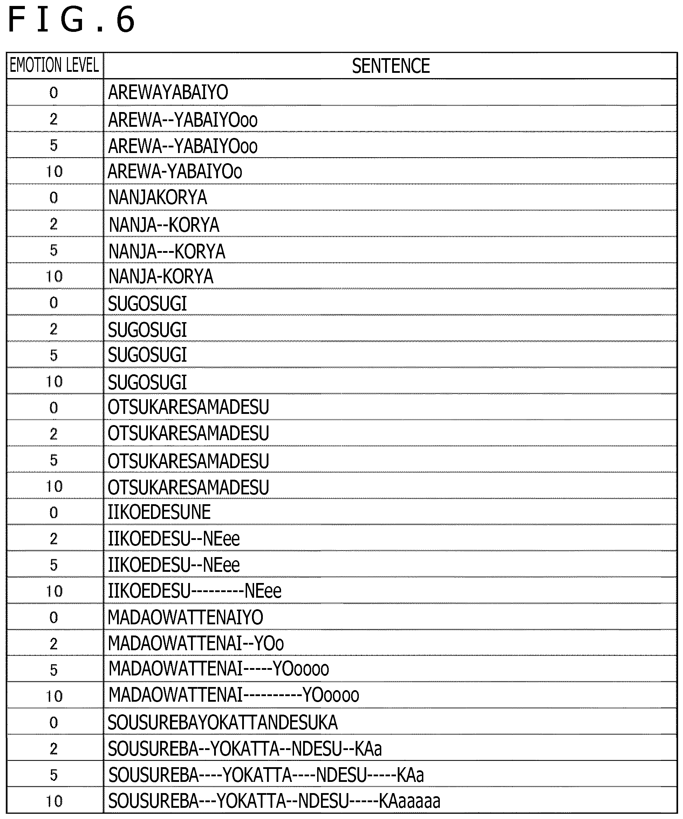

As with FIG. 5, FIG. 6 depicts an example of modifying sentences on the basis of the emotion levels. In this example, a sentence is modified by not only suffixing a character string to the end of the sentence but also inserting a character string halfway into the sentence. Note that, a sentence at the emotion level of 0 serves as the basic sentence prior to modification.

In this example, as in the example of FIG. 5, basically the higher the emotion level, the larger the amount of character strings to be added. However, there are exceptions. For example, given the basic sentence "AREWAYABAIYO," the modified sentence at the emotion level of 2 is "AREWA--YABAIYOoo." At the emotion level of 5, the modified sentence is "AREWA--YABAIYOoo." More specifically, at the emotion levels of 2 and 5, the degree of modification of the sentence (modification level) is the same; the same modified sentence is used at different emotion levels. At the emotion level of 10, the modified sentence is "AREWA-YABAIYOo." More specifically, the modified sentence at the emotion level of 10 has a smaller amount of added character strings than the modified sentence at the emotion level of 2 or 5. Also, in another example, given the basic sentence "SUGOSUGI," no modification includes the sentence at all emotion levels. In this manner, the modification level with regard to the emotion level is somewhat randomized.

Also, although not depicted in FIG. 6, the modified sentence at the emotion level of 2 with regard to the input sentence "That's so crazy" in English corresponding to "AREWAYABAIYO" is "That's sooo crazy." The modified sentence at the emotion level of 5 is "That's soooooo crazzzzy!!!" The modified sentence at the emotion level of 10 is "THAT'S SOOOOOO CRAZZZZYYYY!!!" The modified sentence at the emotion level of 10 is entirely capitalized to express the emotion more strongly than ever.

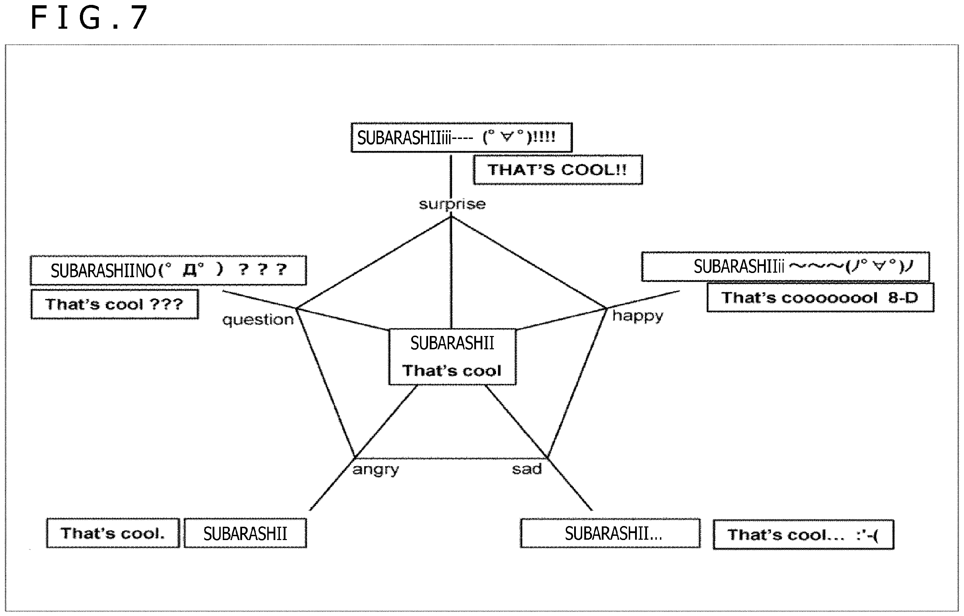

FIG. 7 depicts an example of modifying a sentence on the basis of the emotion types. In this example, the sentence is modified using five emotion types: surprise, happy, sad, angry, and question.

For example, given the input sentence "SUBARASHII," a modified sentence expressing the emotion of surprise has all its characters converted to half-sized katakana characters and is suffixed with a symbol and an emoticon, as illustrated in FIG. 7. A modified sentence expressing the happy emotion is suffixed with symbols and an emoticon, as depicted in FIG. 7. A modified sentence expressing the sad emotion is suffixed with symbols as sketched in FIG. 7. A modified sentence expressing the angry emotion remains unchanged as indicated in FIG. 7. This is because it is difficult to combine the sentence "SUBARASHII" with the emotion of anger. A modified sentence expressing the emotion of question is converted to an interrogative suffixed with an emoticon as illustrated in FIG. 7.

Also, in another example, given the input sentence "That's cool" in English corresponding to the sentence "SUBARASHII," a modified sentence expressing the emotion of surprise is entirely capitalized and suffixed with symbols as depicted in FIG. 7. A modified sentence expressing the happy emotion has the number of vowels "o" increased in the word "cool" at the end of the sentence and is suffixed with a symbol and an emoticon as indicated in FIG. 7. A modified sentence expressing the sad emotion is suffixed with symbols and an emoticon as illustrated in FIG. 7. A modified sentence expressing the angry emotion remains unchanged as illustrated in FIG. 7. This is because it is difficult to combine the sentence "That's cool" with the emotion of anger. A modified sentence expressing the emotion of question is suffixed with symbols as pictured in FIG. 7.

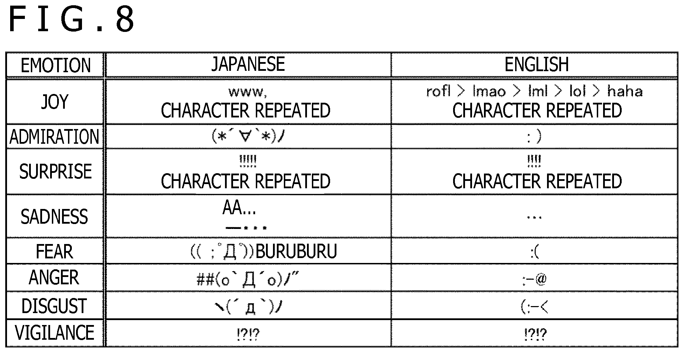

FIG. 8 depicts an example of modifying sentences on the basis of the emotion types indicated by Plutchik's wheel of emotions. In this example, a sentence is modified using eight emotion types: joy, admiration, surprise, sadness, fear, anger, disgust, and vigilance. Note that, included in FIG. 8 are examples of character strings to be added to the end of the input sentence when that sentence is modified by adding one of the emotions thereto.

For example, in the case where the input sentence is in Japanese, the sentence is suffixed with "www" or has the last character of the sentence repeated to express the emotion of joy. The sentence may be suffixed with an emoticon illustrated in FIG. 8 to express the emotion of admiration. The sentence may be suffixed with symbols "!!!!!" or have the last character of the sentence repeated to express the emotion of surprise. The sentence may be suffixed with "aa..." or with "-..." to express the emotion of sadness. The sentence may be suffixed with another emoticon depicted in FIG. 8 to express the emotion of fear. The sentence may be suffixed with another emoticon indicated in FIG. 8 to express the emotion of anger. The sentence may be suffixed with another emoticon illustrated in FIG. 8 to express the emotion of disgust. The sentence may be suffixed with symbols "!?!?" to express the emotion of vigilance.

Also, as a further example, in the case where the input sentence is in English, the sentence may be suffixed with "rofl," "lmao," "lml," "lol," or "haha" or have the last character of the sentence repeated to express the emotion of joy. Note that, incidentally, the emotion levels drop progressively from "rofl" to "lmao" to "lml" to "lol" to "haha," in that order. The sentence may be suffixed with an emoticon depicted in FIG. 8 to express the emotion of admiration. The sentence may be suffixed with symbols "!!!!!" or have the last character of the sentence repeated to express the emotion of surprise. The sentence may be suffixed with symbols "..." to express the emotion of sadness. The sentence may be suffixed with another emoticon illustrated in FIG. 8 to express the emotion of fear. The sentence may be suffixed with another emoticon depicted in FIG. 8 to express the emotion of anger. The sentence may be suffixed with another emoticon illustrated in FIG. 8 to express the emotion of disgust. The sentence may be suffixed with symbols "!?!?" to express the emotion of vigilance.

Note that, the types of emotions and the number of emotion types may be determined as desired.

Also, sentences may also be modified on the basis of both the emotion level and the emotion type. For example, where the same emotion is expressed, the higher the emotion level, the higher the modification level may be raised by increasing the amount of character strings to be added; the lower the emotion level, the lower the modification level may be reduced by decreasing the amount of character strings to be added.

Furthermore, even where the same emotion level is set, the character string to be added to the input sentence may be somewhat randomized in order to increase the degree of freedom for the user's input. For example, when the user repeats side-to-side swipes on the touch pad 101 of the controller 100 to repeatedly raise and lower the emotion level, differently modified sentences may be presented with regard to the same emotion level.

In step S56 back in FIG. 4, the modification section 78 transmits the modified sentence. Specifically, the modification section 78 generates modified sentence information including the modified sentence and transmits the modified sentence information thus generated to the client 11 via the communication section 61.

Subsequently, control is returned to step S51 and the processing of the subsequent steps is repeated.

### <1-4. Specific examples of the method of emotion input>

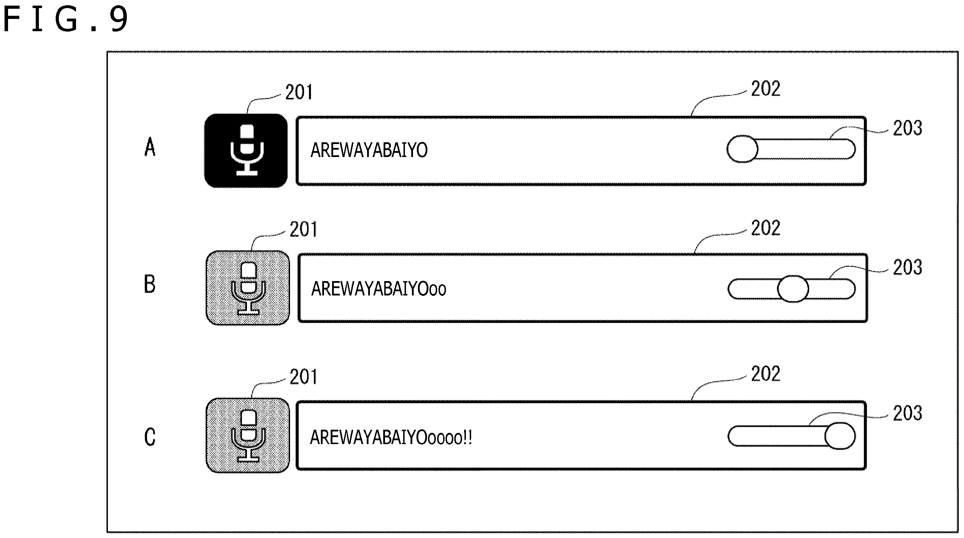

Specific examples of the emotion input method are explained below with reference to FIGS. 9 to 19.

FIG. 9 depicts an example of the method of inputting the emotion level.

Subfigures A to C in FIG. 9 depict typical screens displayed on the display section 23 of the client 11. Each screen displays an icon 201, a window 202, and a slider 203. The slider 203 is positioned at the right edge inside the window 202.

The icon 201 indicates whether speech input is accepted. When speech input is accepted, the icon 201 is displayed in dark color; when speech input is not accepted, the icon 201 is displayed in light color.

The window 202 displays an input sentence obtained through speech recognition or a modified sentence acquired by modifying the input sentence.

The slider 203 indicates an emotion level setting. The closer the tick mark on the scale of the slider 203 representing the amount of the operation performed by the user is to the left edge, the lower the emotion level. When the tick mark is at the left edge, the emotion level is at the lowest 0. On the other hand, the closer the tick mark on the scale of the slider 203 is to the right edge, the higher the emotion level. When the tick mark is at the right edge, the emotion level is at the highest.

Subfigure A in FIG. 9 indicates that the emotion level is set to 0 and that an unmodified input sentence "AREWAYABAIYO" is displayed. In addition, the user adjusts the emotion level by operating the operation section 22 of the client 11. For example, by means of the operation section 22, the user directly manipulates the tick mark of the slider 203 using a pointer (not depicted) on the screen to adjust the emotion level. Alternatively, the user performs a side-to-side swipe on the touch pad 101 of the controller 100 to adjust the emotion level.

Note that, in the example of Subfigure B in FIG. 9, the emotion level is set to a median value. In addition, the vowel "YO" at the end of the input sentence is continued to lower-case characters "oo," before being added to the input sentence. This provides the display of a modified sentence "AREWAYABAIYOoo." In the example of Subfigure C in FIG. 9, the emotion level is set to its maximum value. In addition, The modified sentence in Subfigure B in FIG. 9 is suffixed with "oo" and "!!" to give the display of a modified sentence "AREWAYABAIYOoooooo!!"

Also, In another example, not depicted, where the input sentence is "That's crazy" in English and where the emotion level is set to the median value as in the example of Subfigure B in FIG. 9, the consonant "z" at the end of the last word "crazy" in the input sentence is repeated to give the display of a modified sentence "That's crazzzzzy." Also, in a further example where the emotion level is set to its maximum value as in the example of Subfigure C in FIG. 9, the emotion level is expressed with a larger number of the consonants "z" in the word "crazy" than the case where the emotion level is at the median value. Also suffixed with "!!!!!," the resulting modified sentence is displayed as "That's crazzzzzzzzzzy!!!!!"

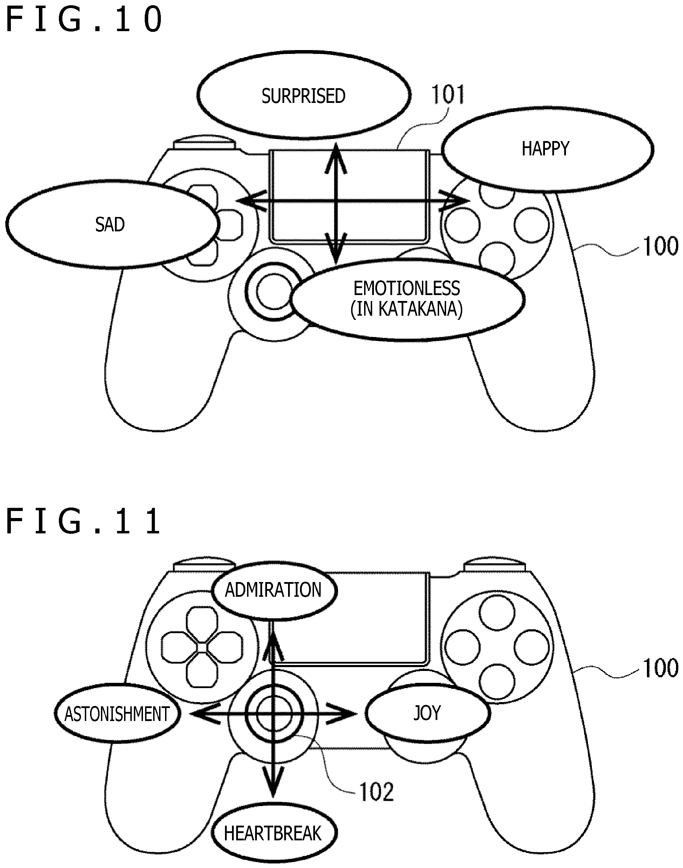

FIGS. 10 and 11 depict examples of the method of inputting the emotion type using the controller 100.

For example, as illustrated in FIG. 10, the user performs up-down or side-to-side swipes (as viewed by the user doing the operation) on the touch pad 101 to select the emotion type. For instance, an upward swipe selects "surprised." A downward swipe selects "emotionless." In this case, the entire sentence is converted to katakana characters in order to express no emotion. A leftward swipe selects "sad." A rightward swipe selects "happy."

Note that, in another example, the emotion level may be set in addition to the emotion type on the basis of the distance of the swipe on the touch pad 101 (i.e., based on the amount of the user's operation). For instance, the shorter the distance of the swipe on the touch pad 101, the lower the emotion level is set; the longer the distance of the swipe on the touch pad 101, the higher the emotion level is set.

Also, in a further example where the touch pad 101 detects swipes only in two axial directions of up-down and side-to-side, only four emotion types can be input using the touch pad 101. In this case, five or more emotion types may be input using other operating members of the controller 100.

For example, as depicted in FIG. 11, the stick 102 may be tilted up, down, right or left (as viewed by the user doing the operation) to select the emotion type. For instance, tilting the stick 102 upward while pressing it down selects "admiration." Titling the stick 102 downward while pressing it down selects "heartbreak." Tilting the stick 102 leftward while pressing it down selects "astonishment." Tilting the stick 102 rightward while pressing it down selects "joy."

Note that, in another example, the emotion level may be set in addition to the emotion type in accordance with the amount by which the stick 102 is tilted (i.e., the amount of the user's operation). For instance, the smaller the amount by which the stick 102 is tilted, the lower the emotion level is set; the larger the amount by which the stick 102 is tilted, the higher the emotion level is set.

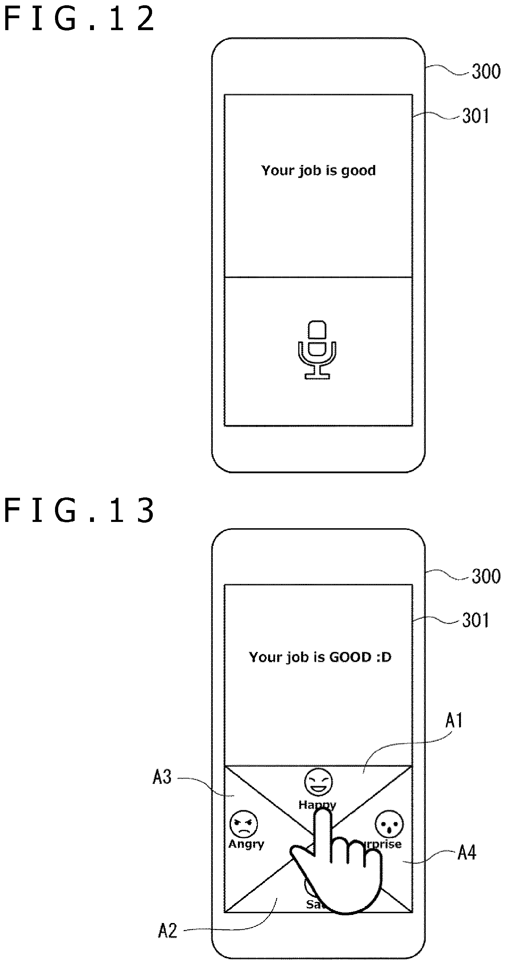

FIGS. 12 to 17 depict examples of the method of inputting the emotion type in the case where the client 11 is constituted by a smartphone 300.

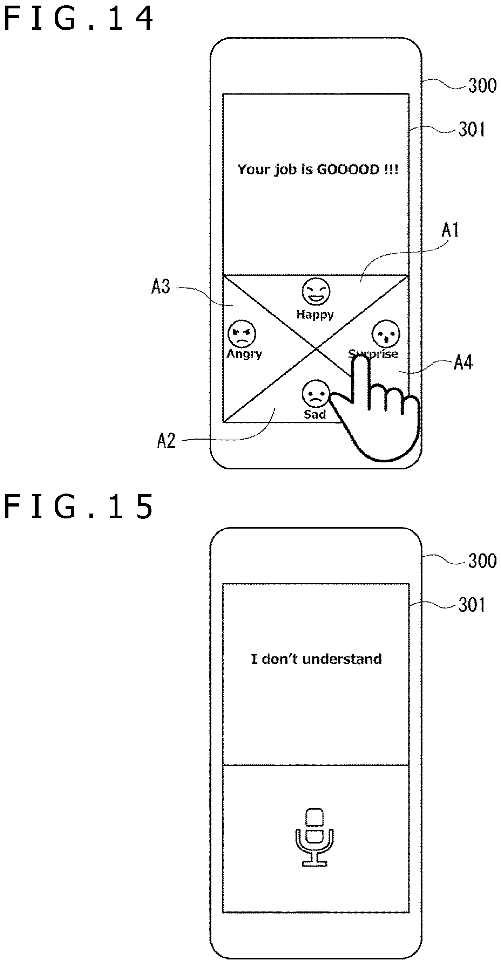

In the example of FIG. 12, a touch panel display 301 of the smartphone 300 displays an input sentence "Your job is good" obtained through speech recognition. In addition, when, for example, a lower part of the touch panel display 301 is touched, the lower part displays areas A1 to A4 for selecting the emotion type as illustrated in FIGS. 13 and 14. The areas A1 to A4 are each triangular in shape and are formed by two diagonal lines dividing a rectangular area. The areas A1 and A2 are positioned up and down, and the areas A3 and A4 side by side. The area A1 corresponds to the emotion type "Happy," the area A2 to "Sad," the area A3 to "Angry," and the area A4 to "Surprise."

In addition, when, for example, the user touches the inside of the area A1 with a fingertip, the emotion of joy is selected, as depicted in FIG. 13. In addition, the word "good" at the end of the input sentence is then capitalized and suffixed with an emoticon ":D." Thus a modified sentence "Your job is GOOD :D" is displayed on the upper part of the touch panel display 301.

Also, in another example, as illustrated in FIG. 14, where the user touches the inside of the area A4 with a fingertip, the emotion of surprise is selected. In addition, the word "good" at the end of the input sentence is then capitalized with the vowel "O" repeated and suffixed with "!!!" Thus a modified sentence "Your job is GOOOOD!!!" is displayed on the upper part of the touch panel display 301.

In the example of FIG. 15, the touch panel display 301 of the smartphone 300 displays an input sentence "I don't understand" obtained through speech recognition.

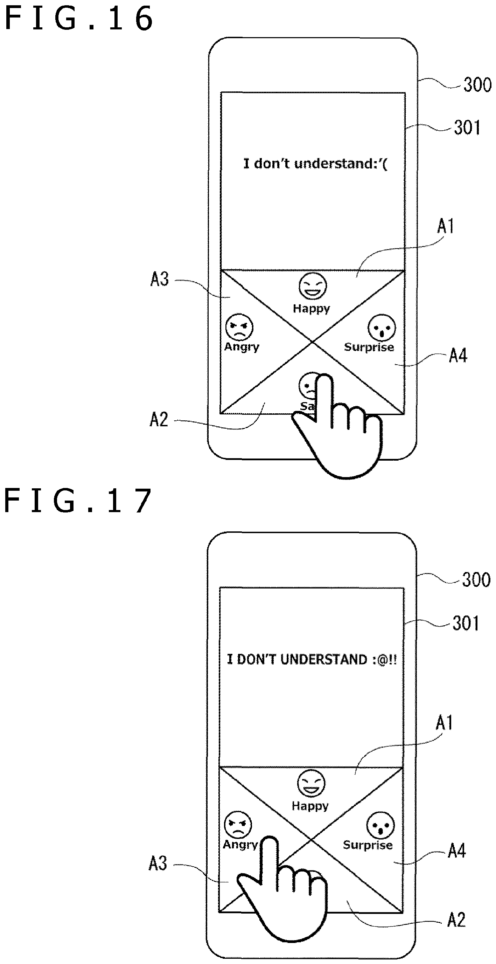

In addition, when, for example, the user touches the inside of the area A2 with a fingertip as depicted in FIG. 16, the emotion of sadness is selected. In addition, the upper part of the touch panel display 301 then displays a modified sentence "I don't understand :'(" suffixed with the emoticon :' (.

Also, in another example, as illustrated in FIG. 17, where the user touches the inside of the area A3 with a fingertip, the emotion of anger is selected. In addition, the upper part of the touch panel display 301 then displays a modified sentence "I don't understand :@!!" suffixed with the emoticon :@!!

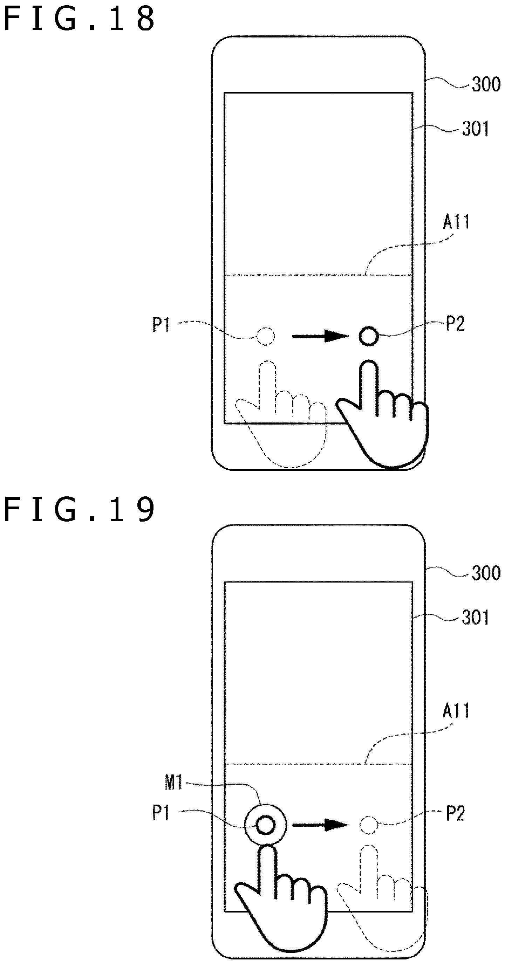

Explained below with reference to FIGS. 18 to 20 are methods of inputting the emotion level using the smartphone 300.

For example, as depicted in FIG. 18, an emotion type and an emotion level are input by swiping the inside of an input area A11 in the lower part of the touch panel display 301. Specifically, the emotion type is selected depending on the direction of the swipe. Also, the emotion level is set depending on the distance of the swipe representing the amount of the user's operation (called the swipe amount hereinafter).

For example, the emotion type and the emotion level are set at the time the user detaches the fingertip from the touch panel display 301 after touching a position P1 inside the input area A11 on the touch panel display 301 and making a swipe up to a position P2. More specifically, the emotion type is selected by the direction of the switch from the position P1 to the position P2. Also, the emotion level is set on the basis of the swipe amount between the positions P1 and P2. For example, the shorter the swipe amount, the lower the emotion level is set; the longer the swipe amount, the higher the emotion level is set.

Note that, for example, as illustrated in FIG. 19, the input of the emotion is canceled when the user makes a swipe with a fingertip from the position P1 to the position P2, returns to the position P1 without detaching the fingertip from the touch panel display 301, and detaches the fingertip from the touch panel display 301. In this case, the touch panel display 301 is preferably arranged to display, for example, a mark M1 or the like surrounding the position P1 so that the user can easily recognize the position initially touched with the fingertip.

Note that, it is to be noted that the touch panel display 301 of the smartphone 300 is small in size, so that the swipe amount thereon is limited. Therefore, the larger the number of emotion levels involved, the smaller the difference between the swipe amounts corresponding to the emotion levels. This makes it difficult to set a desired emotion level. In this case, for example, the touch panel display 301 is configured to be pressure-sensitive, and more specifically, enabled to detect the force of pressing down the touch panel display 301 (called the pressing amount hereinafter) so that the emotion level may be set by a combination of the swipe amount and the pressing force.

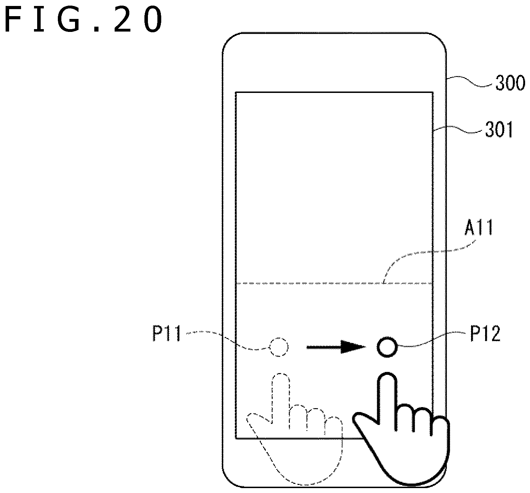

For example, as depicted in FIG. 20, when the user touches a position P11 inside the input area A11 on the touch panel display 301, makes a swipe up to a position P12, and then detaches the fingertip from the touch panel display 301, the direction of the swipe from the position P11 to the position P12 causes the emotion type to be selected. Also, the swipe amount representing the distance between the positions P11 and P12 and the pressing amount at the position P12 combine to set the emotion level. For example, in the case where the swipe amount is 1 cm and the pressing amount is low, the emotion level is set to 1. Where the swipe amount is 5 cm and the pressing amount is low, the emotion level is set to 10. Where the swipe amount is 1 cm and the pressing amount is high, the emotion level is set to 2. Where the swipe amount is 5 cm and the pressing amount is high, the emotion level is set to 20.

Note that, alternatively, the pressing amount may be replaced with the time during which the position P12 is pressed down, the pressing time being used for setting the emotion level.

### <1-5. Second embodiment of the processing performed by the information processing system 10>

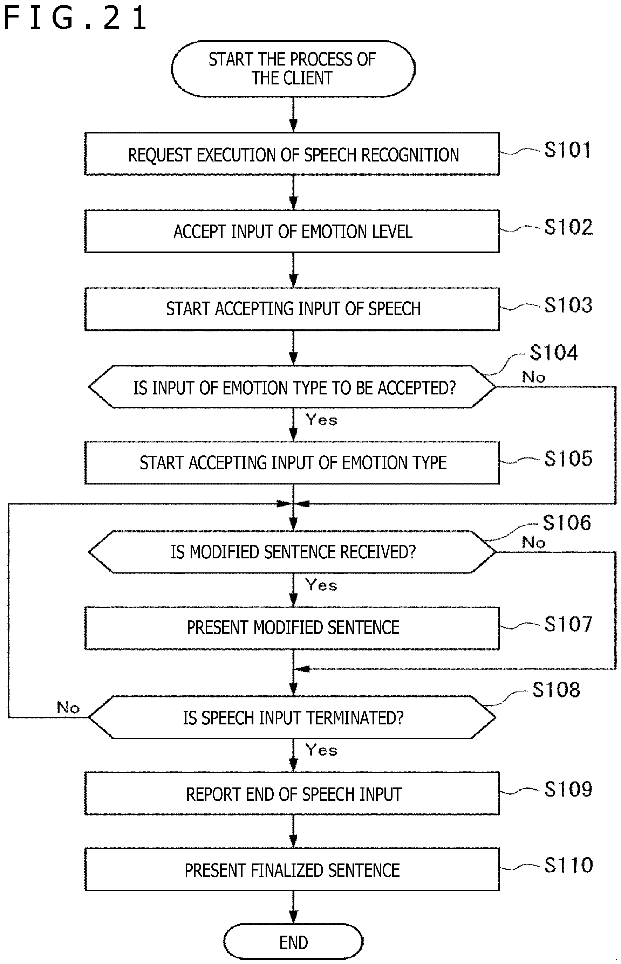

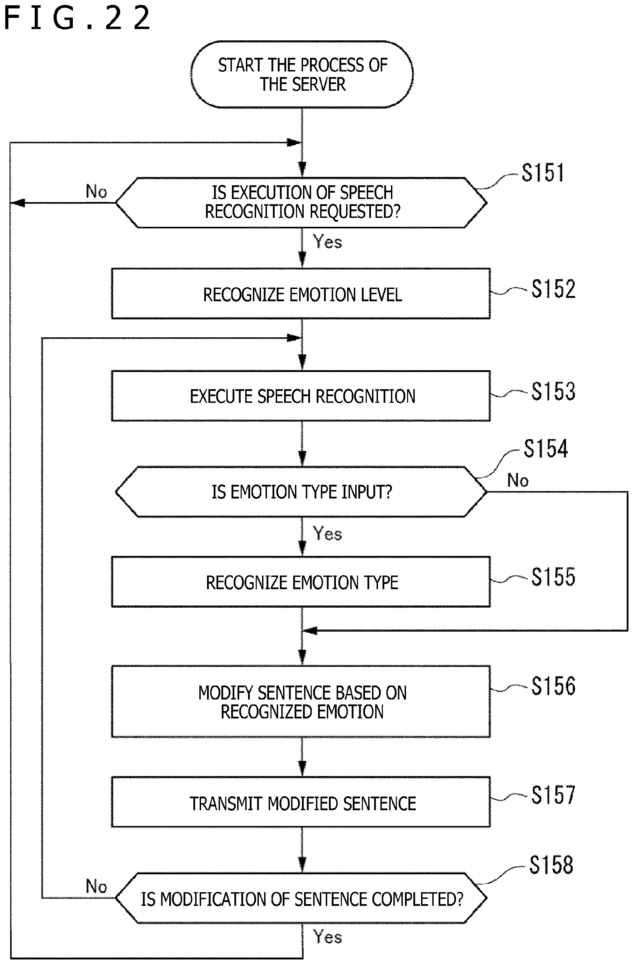

A second embodiment of the processing performed by the information processing system 10 is explained below with reference to FIGS. 21 and 22. The second embodiment differs significantly from the first embodiment in that the emotion level is set prior to execution of speech recognition.

First, the process of the client 11 is explained with reference to the flowchart in FIG. 21. This process is started, for example, when the user inputs an order to execute speech recognition using the operation section 22.

In step S101, as in step S1 in FIG. 3, the server 12 is requested to execute speech recognition.

In step S102, the client 11 accepts input of the emotion level. For example, the presentation control section 42 controls the display section 23 or the presentation section 24 to prompt the user to input the emotion level. Also, the presentation control section 42 causes the display section 23 to display an input screen through which the emotion level is input.

In response, the user inputs the emotion level by means of the operation section 22. The emotion level is input using one of the above-described methods, for example.

The input/output section 41 acquires the operation data representing the user's operation from the operation section 22, and transmits the acquired operation data to the server 12 via the communication section 26.

In step S103, the client 11 starts accepting speech input. Specifically, for example, the presentation control section 42 controls the display section 23 or the presentation section 24 to prompt the user to input by speech the sentence desired to be recognized (input sentence). In response, the user starts inputting the input sentence by speech. The input/output control section 41 starts the process of acquiring from the speech input section 21 the speech data representing the speech of the input sentence and transmitting the acquired speech data to the server 12 via the communication section 26.

In step S153 in FIG. 22, to be discussed later, the server 12 performs speech recognition on the speech data from the client 11. In step S157, the server 12 transmits modified sentence information including a modified sentence derived from modification of the input sentence obtained through speech recognition.

In step S104, the presentation control section 42 discriminates whether or not to accept input of the emotion type. In the case where the presentation control section 42 discriminates that input of the emotion type is to be accepted, the processing advances to step S105.

In step S105, the client 11 starts accepting input of the emotion type. Specifically, for example, the presentation control section 42 controls the display section 23 or the presentation section 24 to report that the emotion type can be input. In addition, every time the user inputs an emotion type by means of the operation section 22, the input/output control section 41 acquires operation data from the operation section 22 and transmits the acquired operation data to the server 12 via the communication section 26. Note that, the emotion type is input using one of the above-described methods, for example.

Subsequently, the processing advances to step S106.

On the other hand, where it is discriminated in step S104 that input of the emotion type is not to be accepted, the processing of step S105 is skipped and the processing advances to step S106. This case applies, for example, when only the emotion level can be input as in the example discussed above with reference to FIG. 9.

In step S106, the input/output control section 41 discriminates whether a modified sentence is received. In the case where the modified sentence information is received from the server 12 via the communication section 26, the input/output control section 41 discriminates that the modified sentence is received. Control is then transferred to step S107.

In step S107, as in the processing of step S5 in FIG. 3, the modified sentence is presented.

Subsequently, the processing advances to step S108.

On the other hand, where it is discriminated in step S106 that the modified sentence is not received, the processing of step S107 is skipped. Control is then transferred to step S108.

In step S108, the input/output control section 41 discriminates whether speech input is terminated. In the case where it is discriminated that speech input is not terminated, control is returned to step S106.

Subsequently, the processing of step S106 to step S108 is repeated until it is discriminated in step S108 that speech input is terminated.

On the other hand, in the case where no speech is input at least for a predetermined time period in step S108 for example, the input/output control section 41 discriminates that speech input is terminated. The processing advances to step S109. Alternatively, in the case where the input/output control section 41 detects that an operation is performed to terminate speech input on the basis of the operation data from the operation section 22, the input/output control section 41 discriminates that speech input is terminated. The processing advances to step S109.

In step S109, the input/output control section 41 reports the end of speech input. Specifically, the input/output control section 41 generates speech input termination information for reporting the end of speech input and transmits the generated information to the server 12 via the communication section 26.

In step S110, as in the processing of step S5 in FIG. 3, the finalized sentence (modified sentence) is presented.

Subsequently, the process of the client 11 is terminated.

Explained next with reference to the flowchart in FIG. 22 is the process performed by the server 12 in conjunction with the process of the client 11 in FIG. 21.

In step S151, as in the processing of step S51 in FIG. 4, it is discriminated whether execution of speech recognition is requested. This discrimination processing is repeated in a suitably timed manner. In the case where it is discriminated that execution of speech recognition is requested, the processing advances to step S152.

In step S152, the server 12 recognizes the emotion level. Specifically, the operation recognition section 76 receives via the communication section 61 the operation data transmitted from the client 11 in step S102 in FIG. 21. On the basis of the operation data, the operation recognition section 76 recognizes the operation performed on the client 11. The emotion recognition section 77 recognizes the emotion level input by the user on the basis of the result of recognition by the operation recognition section 76.

In step S153, as in the processing of step S52 in FIG. 4, speech recognition is performed.

In step S154, the operation recognition section 76 discriminates whether an emotion type is input. In the case where the operation recognition section 76 receives via the communication section 61 the operation data transmitted from the client 11 in step S105 in FIG. 21, the operation recognition section 76 recognizes the operation performed on the client 11 on the basis of the received operation data. In addition, where the operation recognition section 76 discriminates that the emotion type is input on the basis of the recognition result, the processing advances to step S155.

In step S155, the emotion recognition section 77 recognizes the emotion type. More specifically, the emotion recognition section 77 recognizes the emotion type input by the user on the basis of the result of the recognition performed by the operation recognition section 76 in step S154.

Subsequently, the processing advances to step S156.

On the other hand, where it is discriminated in step S154 that the emotion type is not input, the processing of step S155 is skipped and the processing advances to step S156.

In step S156, as in the processing of step S55 in FIG. 4, the sentence is modified on the basis of the recognized emotion. Note that, this step is halfway through the processing of speech input or speech recognition. Even if the entire input sentence has yet to be obtained, the sentence input halfway so far is modified.

In step S157, as in the processing of step S56 in FIG 4, the modified sentence is transmitted. In this case, there may be a case where a modified sentence obtained by modifying the sentence input halfway is transmitted. Therefore, this allows the user to verify, during speech input for example, the status of modification of the sentence that has been input so far by speech.

In step S158, the modification section 78 discriminates whether modification of the sentence is completed. In the case where it is discriminated that modification of the sentence is not completed yet, control is returned to step S153.

Subsequently, the processing from step S153 to step S158 is repeated until it is discriminated in step S158 that modification of the sentence is completed.

Meanwhile, in step S158, upon receipt of a speech input termination signal transmitted from the client 11 in step S109 in FIG. 21 after the recognized input sentence is entirely modified and the modified sentence is transmitted to the client 11, the modification section 78 discriminates that modification of the sentence is completed. Control is then transferred to step S151.

Subsequently, the processing subsequent to step S151 is carried out.

As described above, with the emotion level established first, the sentence is input by speech. The sentence obtained through speech recognition is then modified on the basis of the established emotion level. Therefore, for example, after inputting the emotion level, the user has only to input a speech in order to obtain the sentence modified automatically on the basis of the emotion level.

Also, in another example, the user can input emotion types while inputting a sentence by speech so as to have portions of the single sentence modified in accordance with the different emotion types. Note that, in a further example, the user may input both the emotion level and the emotion type while inputting the sentence by speech.

### <<2. Alternative examples>>

What follows is an explanation of alternative examples of the above-described embodiment of the present technology.

### <2-1. Alternative examples of the method of modifying sentences>

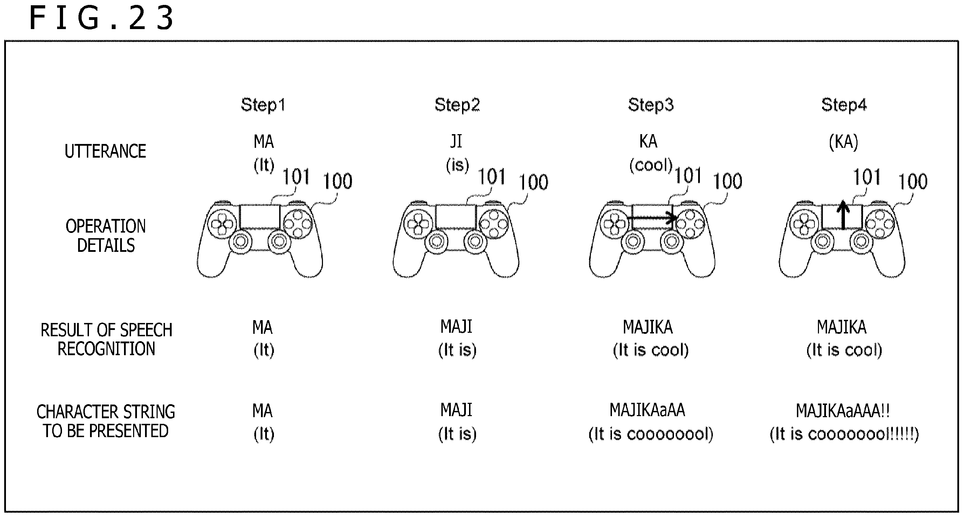

For example, the user may designate the portion of a speech desired to be modified during speech input so that the designated portion is modified as desired. This example is explained below with reference to FIG. 23.

In the example depicted in FIG. 23, the user operates the controller 100 during speech input. In this case, the portion of the speech being input during the user's operation is modified.

Explained first is a typical case where the user inputs a sentence "MAJIKA" by speech and has the input sentence modified.

First, the user utters "MA." In this case, the user does not operate the controller 100. As a result, the result of speech recognition "MA" is presented unmodified.

Next, the user utters "JI." In this case, the user does not operate the controller 100. As a result, the result of speech recognition "MAJI" is presented unmodified.

Next, the user utters "KA." In this case, the user swipes right the touch pad 101 of the controller 100. As a result, the portion "KA" input during the right swipe is to be targeted for modification. Also, the right swipe corresponds to the repeat of characters or symbols. Consequently, the result of speech recognition "MAJIKA" is suffixed with "aAA," and the modified sentence "MAJIKAaAA" is presented. Note that, incidentally, the amount of repeated characters or symbols may be adjusted in accordance with the amount of right swipe, for example.

In addition, the user proceeds to swipe up the touch pad 101 of the controller 100 without uttering anything. For example, the up swipe corresponds to the addition of a symbol "!." As a result, the sentence is further suffixed with "!!," and the modified sentence "MAJIKAaAA!!" is presented. Note that, incidentally, the amount of added symbols "!" is adjusted in accordance with the amount of up swipe.

Explained next is another typical case in which the user inputs a sentence "It is cool" by speech and has the input sentence modified.

First, the user utters "It." In this case, the user does not operate the controller 100. Consequently, the result of speech recognition "It" is presented unmodified.

Next, the user utters "is." In this case, the user does not operate the controller 100. Consequently the result of speech recognition "It is" is presented unmodified.

Next, the user utters "cool." In this case, the user swipes right the touch pad 101 of the controller 100. As a result, the portion "cool" input during the right swipe is to be targeted for modification. Specifically, the word "cool" in the speech recognition result "It is cool" is supplemented with vowels "o," and the modified sentence "It is coooooool" is presented.

In addition, the user proceeds to swipe up the touch pad 101 of the controller 100 without uttering anything. As a result, the sentence is further suffixed with "!!!!!," and the modified sentence "It is cooooooo!!!!!" is presented.

In this manner, the user can easily modify the desired portion of the sentence.

Note that, there may presumably be cases where it is difficult to synchronize the operation on the touch pad 101 with the timing of utterance. In such cases, the modification section 78 of the server 12 may be arranged to more or less control modification of the sentence. For example, in the case where "MAJIKA" is to be modified, the modification of the portion "J" is seldom expected. Thus the modification section 78 may, for example, refrain from modifying the portion "JI" even if the touch pad 101 is operated at the time the portion "JI" is uttered. Alternatively, the modification section 78 my modify the portion "KA" in place of the portion "JI" subsequent thereto.

Also, the directions of operations can be assigned as desired to the types of characters to be added. Also, the emotion types may be assigned to different directions of operations so that the portion corresponding to the speech input at the time of the user's operation may be modified on the basis of the emotion type selected by the user.

Furthermore, it was explained above using examples that the sentence is modified by adding a character string halfway into the input sentence or to the end thereof. Alternatively, the sentence may be modified by adding a character string to the beginning thereof.

It was also explained above using examples that the sentence is modified by adding a string of characters, symbols, or emoticons thereto. Alternatively, the expression of the sentence may be changed while the meaning of the original sentence is maintained. Such changes of expression may include switching of words. For example, a sentence "TANOSHII" may presumably be switched to a happier-sounding expression such as "HAPPI-" or "Haaaaappy!"

In such cases, the degree at which the expression of the sentence is changed is adjusted on the basis of the emotion level. Also, in another example, the method of changing the expression is selected in accordance with the emotion type.

Furthermore,, in the case where a sentence is input as a tool for communicating with the other party in a chat or mail service, the sentence may be modified using a symbol or an emoticon that does not overlap with the symbols or emoticons used by the other party.

Also, the function of sentence modification may be arranged to be turned on or off as desired.

Furthermore, the mannerism of the user inputting sentences and the tendency of the modified sentences preferred by the user may be learned from past logs for example, and the sentence of interest may be modified in accordance with the user's mannerism and preferences.

### <2-2. Alternative examples of the method of recognizing and inputting the emotion>

Explained above were examples in which the user manually inputs the emotion. Alternatively, the server 12 may automatically recognize the emotion.

Explained below with reference to the flowchart in FIG. 23 is an example in which the server 12 performs an emotion recognition process.

In step S101, the server 12 extracts at least one feature quantity from the sentence and speech data.

For example, the natural language processing section 73 extracts feature quantities by performing natural language processing such as morphological analysis and parsing on the sentence targeted for modification (i.e., input sentence). Note that, the input sentence may be the result of speech recognition of the speech data, or may be given as text data.

Also, the sound processing section 71 may extract feature quantities from the speech data representing the sentence input by the user.

In step S102, the emotion recognition section 77 recognizes the emotion based on the feature quantities. Specifically, the emotion recognition section 77 recognizes the emotion desired to be added by the user on the basis of at least one of the feature quantities from the input sentence and the speech data. Note that, the emotion recognition section 77 may recognize both the emotion type and the emotion level, or either of them.

Note that, any suitable method can be used by the emotion recognition section 77 for recognizing the emotion. For example, machine learning or a rule-based recognition process can be adopted.

Subsequently, the emotion recognition process is terminated.

Note that, through this process, the emotion recognition section 77 may, using machine learning for example, automatically perform modifications of sentences not much related to the emotions, such as conversions to interrogatives or to imperatives.

Also, when automatically recognizing the emotion for the current sentence, the emotion recognition section 77 may carry out the recognition process in accordance with the analysis result of natural language processing executed on the immediately preceding sentence or sentences and with the result of emotion recognition performed thereon. For example, in the case where the recognized emotion added to the immediately preceding sentence is "happy," it is highly probable that the emotion to be added to the subsequent sentence will also be "happy." In such a case, the priority of the "happy" emotion may be raised in the recognition process.

Also, in the case where the sentence is to be input as a response to the other party in the chat or mail service for example, the emotion recognition section 77 may automatically recognize the emotion for the sentence on the basis of the emotion of the other party's sentences. For example, where an emoticon representing the "happy" emotion is included in the other party's sentences, the priority of the "happy" emotion may be raised in the recognition process.

In a further example, given an image captured of the user, the facial expression of the user may be used in the emotion recognition process.

Also, in a still further example, where the emotion type is to be selected, one or multiple emotion types may be first presented as recommended emotion types. In addition, in the case where the user is unable to find a desired emotion type, all emotion types may be presented for possible selection.

In a yet further example, where the controller 100 incorporates an acceleration sensor and a gyro sensor, the controller 100 may be arranged to be vibrated to input the emotion level or the emotion type.

Also, the user may be allowed to input the emotion type or the emotion level using gestures for example. Different gestures may be assigned to different emotion types for example. Then the emotion level may be set on the basis of the size of the gesture being made.

### <2-3. Alternative examples of the system configuration>

Depicted in FIG. 1 is one example of the configuration of the information processing system 10. The system configuration may be changed as needed.

For example, some of the functions of the client 11 can be incorporated in the server 12, or some of the functions of the server 12 can be included in the client 11.

For example, the client 11 may recognize the emotion. The server 12 may then modify the sentence on the basis of the recognized emotion.

Also, in another example, the server 12 may recognize the emotion. The client 11 may then modify the sentence on the basis of the recognized emotion.

Furthermore,, the client 11 and the server 12 may be integrated into a single apparatus for example. That single apparatus may then be used to perform the above-described processes.

Furthermore, in cases where input information is given in ways other than speech input, the present technology can also be used. For example, this technology applies where the input information given as text information is modified so as to include emotions.

### <<3. Application examples>>

The series of the processes described above can be executed either by hardware or by software. Where the series of the processes is to be carried out by software, the programs constituting the software are installed into a suitable computer. Variations of the computer include one with the software installed beforehand in its dedicated hardware, and a general-purpose personal computer or like equipment capable of executing diverse functions based on the programs installed therein.

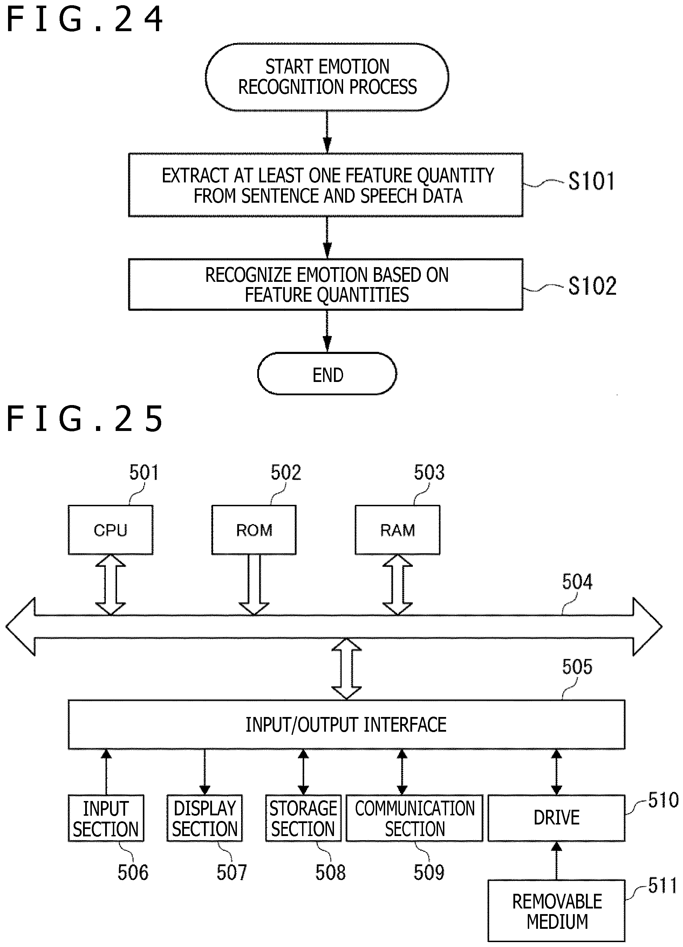

FIG. 25 is a block diagram depicting a typical hardware configuration of a computer that executes the above-described series of the processes using programs.

In the computer, a CPU (Central Processing Unit) 501, a ROM (Read Only Memory) 502, and a RAM (Random Access Memory) 503 are interconnected via a bus 504.

The bus 504 is further connected with an input/output interface 505. The input/output interface 505 is connected with an input section 506, an output section 507, a storage section 508, a communication section 509, and a drive 510.

The input section 506 includes a keyboard, a mouse, and a microphone for example. The output section 507 includes a display unit and speakers, for example. The storage section 508 is typically formed by a hard disk or a nonvolatile memory. The communication section 509 is typically constituted by a network interface. The drive 510 drives removable media 511 such as a magnetic disk, an optical disk, a magneto-optical disk, or a semiconductor memory.

In the computer configured as described above, the CPU 501 performs the above-mentioned series of the processes by loading appropriate programs from the storage section 508 into the RAM 503 via the input/output interface 505 and the bus 504 and by executing the loaded programs.

The programs to be executed by the computer (CPU 501) can be recorded on the removable media 511 such as packaged media when offered. The programs can also be offered via wired or wireless transmission media such as local area networks, the Internet, and digital satellite broadcasting.

In the computer, the programs can be installed into the storage section 508 from the removable media 511 attached to the drive 510 via the input/output interface 505. The programs can also be installed into the storage section 508 after being received by the communication section 509 via wired or wireless transmission media. The programs can alternatively be preinstalled in the ROM 502 or in the storage section 508.

Note that, incidentally, each program to be executed by the computer may be processed chronologically, i.e., in the sequence depicted in this description; in parallel with other programs, or in otherwise appropriately timed fashion such as when it is invoked as needed.

Also, multiple computers may be arranged to perform the above-described processes in a coordinated manner. In addition, one or multiple computers performing the above processes constitute a computer system.

Also, in this description, the term "system" refers to an aggregate of multiple components (e.g., apparatuses or modules (parts)). It does not matter whether all components are housed in the same enclosure. Thus a system may be configured with multiple apparatuses housed in separate enclosures and interconnected via a network, or with a single apparatus that houses multiple modules in a single enclosure.

Furthermore, the present technology is not limited to the embodiments discussed above and may be implemented in diverse variations so far as they are within the spirit and scope of this technology.

For example, the present technology can be implemented as a cloud computing setup in which a single function is processed cooperatively by multiple networked devices on a shared basis.

Also, each of the steps discussed in reference to the above-described flowcharts can be executed either by a single apparatus or by multiple apparatuses on a shared basis.

Furthermore, if a single step includes multiple processes, these processes can be executed either by a single apparatus or by multiple apparatuses on a shared basis.

Also, the advantageous effects stated in this description are only examples and are not limitative of the present technology. There may be additional advantageous effects derived from this description.

Also, the present technology when implemented can be preferably configured as follows:
(1) An information processing apparatus including:
   an emotion recognition section configured to recognize an emotion input by a user performing an operation; and
   a modification section configured to modify a first sentence on the basis of the recognized emotion.
(2) The information processing as stated in paragraph (1) above, further including a speech recognition section configured to convert an input speech into the first sentence;
   in which the modification section modifies the first sentence following the conversion by the speech recognition section.
(3) The information processing apparatus as stated in paragraph (2) above in which, in the case where the user performs an operation during input of the input speech, the modification section modifies a portion of the first sentence, the portion corresponding to the speech input during the operation performed by the user.
(4) The information processing apparatus as stated in paragraph (2) or (3) above, in which the emotion recognition section recognizes the emotion on the basis of the input speech.
(5) The information processing apparatus as stated in any one of paragraphs (1) to (4) above, in which the emotion recognition section recognizes at least either a type or a level of the emotion.
(6) The information processing apparatus as stated in paragraph (5) above, in which the emotion recognition section recognizes the emotion level on the basis of an amount of the operation performed by the user.
(7) The information processing apparatus as stated in paragraph (6) above, in which the emotion recognition section recognizes the emotion level on the basis of a combination of an amount of a swipe made by the user on an operation section and a time during which the operation section is pressed down.
(8) The information processing apparatus as stated in any one of paragraphs (5) to (7) above, in which the emotion recognition section recognizes the emotion type on the basis of a direction in which the user performs the operation.
(9) The information processing apparatus as stated in any one of paragraphs (1) to (8) above, in which the modification section adds a character string to at least the beginning, an intermediate position, and the end of the first sentence.
(10) The information processing apparatus as stated in paragraph (9) above, in which the modification section adjusts an amount of the character string to be added on the basis of the recognized emotion level.
(11) The information processing apparatus as stated in paragraph (9) or (10) above, in which the modification section changes the character string to be added on the basis of the recognized emotion type.
(12) The information processing apparatus as stated in any one of paragraphs (1) to (11) above, in which the modification section changes an expression of the first sentence while maintaining the meaning thereof.
(13) The information processing apparatus as stated in paragraph (12) above, in which the modification section adjusts a degree at which the expression is changed on the basis of the recognized emotion level.
(14) The information processing apparatus as stated in paragraph (12) or (13) above, in which the modification section selects a method of changing the expression on the basis of the recognized emotion type.
(15) The information processing apparatus as stated in any one of paragraphs (1) to (14) above, in which the emotion recognition section recognizes the emotion on the basis of the first sentence.
(16) The information processing apparatus as stated in any one of paragraphs (1) to (15) above, in which the emotion recognition section recognizes the emotion on the basis of a second sentence preceding the first sentence.
(17) The information processing apparatus as stated in any one of paragraphs (1) to (16) above in which, in the case where the first sentence is a response to a third sentence, the emotion recognition section recognizes the emotion on the basis of the third sentence.
(18) The information processing apparatus as stated in any one of paragraphs (1) to (17) above, in which the modification section adds to the first sentence an expression corresponding to the recognized emotion.
(19) An information processing method including the steps of:
   recognizing an emotion input by a user performing an operation; and
   modifying a first sentence on the basis of the recognized emotion.

### [Reference Signs List]

- 10: Information processing system
- 11: Client
- 12: Server
- 21: Speech input section
- 22: Operation section
- 23: Display section
- 25: Sensor section
- 27: Control section
- 41: Input/output control section
- 42: Presentation control section
- 43: Execution section
- 62: Control section
- 71: Sound processing section
- 72: Image processing section
- 73: Natural language processing section
- 74: Speech recognition section
- 75: Gesture recognition section
- 76: Operation recognition section
- 77: Emotion recognition section
- 78: Modification section

## Claims

1. An information processing apparatus comprising:
an emotion recognition section configured to recognize an emotion input by a user performing an operation; and
a modification section configured to modify a first sentence on a basis of the recognized emotion.

2. The information processing apparatus according to claim 1, further comprising:
a speech recognition section configured to convert an input speech into the first sentence, wherein
the modification section modifies the first sentence following the conversion by the speech recognition section.

3. The information processing apparatus according to claim 2, wherein,
in a case where the user performs an operation during input of the input speech, the modification section modifies a portion of the first sentence, the portion corresponding to the speech input during the operation performed by the user.

4. The information processing apparatus according to claim 2, wherein
the emotion recognition section recognizes the emotion on the basis of the input speech.

5. The information processing apparatus according to claim 1,
wherein the emotion recognition section recognizes at least either a type or a level of the emotion.

6. The information processing apparatus according to claim 5,
wherein
the emotion recognition section recognizes the emotion level on the basis of an amount of the operation performed by the user.

7. The information processing apparatus according to claim 6,
wherein
the emotion recognition section recognizes the emotion level on the basis of a combination of an amount of a swipe made by the user on an operation section and an amount or a time during which the operation section is pressed down.

8. The information processing apparatus according to claim 5, wherein
the emotion recognition section recognizes the emotion type on the basis of a direction in which the user performs the operation.

9. The information processing apparatus according to claim 1, wherein the modification section adds a character string to at least one of the beginning, an intermediate position, or the end of the first sentence.

10. The information processing apparatus according to claim 9, wherein
the modification section adjusts an amount of the character string to be added on the basis of the recognized emotion level.

11. The information processing apparatus according to claim 9, wherein
the modification section changes the character string to be added on the basis of the recognized emotion type.

12. The information processing apparatus according to claim 1,
wherein the modification section changes an expression of the first sentence while maintaining the meaning thereof.

13. The information processing apparatus according to claim 12, wherein
the modification section adjusts a degree at which the expression is changed on the basis of the recognized emotion level.

14. The information processing apparatus according to claim 12, wherein the modification section selects a method of changing the expression on the basis of the recognized emotion type.

15. The information processing apparatus according to claim 1, wherein the emotion recognition section recognizes the emotion on the basis of the first sentence.

16. The information processing apparatus according to claim 1, wherein the emotion recognition section recognizes the emotion on the basis of a second sentence preceding the first sentence.

17. The information processing apparatus according to claim 1, wherein
in the case where the first sentence is a response to a third sentence, the emotion recognition section recognizes the emotion on the basis of the third sentence.

18. The information processing apparatus according to claim 1, wherein
the modification section adds to the first sentence an expression corresponding to the recognized emotion.

19. An information processing method comprising the steps of:
recognizing an emotion input by a user performing an operation; and
modifying a first sentence on the basis of the recognized emotion.
